# EUROPÄISCHE PATENTANMELDUNG

(11) **EP 1 351 357 A1**
(43) Veröffentlichungstag der Anmeldung: **08.10.2003**
(21) Anmeldenummer: 03007192.2
(22) Anmeldetag: 29.03.2003
(51) Int. Cl.: H02B 13/00

(54) **Mechanische Kopplung für elektrische Schaltanlagen-Felder**

(30) Priorität: 05.04.2002 DE 10214991
(71) Anmelder: Felten & Guilleaume AG, 51063 Köln (DE)
(72) Erfinder: Dirks, Rolf, 47877 Willich (DE); Bogner, Albert, 73614 Schorndorf (DE)

(57) **Zusammenfassung**

Die Erfindung betrifft eine mechanische Kopplung zwischen benachbarten Schaltfeldwänden zweier nebeneinander stehender Schaltfelder. Die Kopplung ist so aufgebaut, dass an einer Wand **1** eines ersten Schaltfeldes **10** mindestens eine erste Buchse **6.1** zur Aufnahme eines Bolzens **6.2** und an oder in einer Wand **1** eines anderen Schaltfeldes **10** mindestens eine identische Buchse **6.1** für die Aufnahme einer Adapterhülse **6.3** vorhanden ist. Die Schaltfelder werden mit einer Spannschraube **70** zusammengezogen, wobei diese die Adapterhülse durchgreift und in ein im hohlzylindrischen Bolzen **6.2** ausgebildetes Gewinde 54 fasst. Mit dem Ineinanderfügen des Bolzens **6.2** in die Adapterhülse **6.3** wird eine parallele Lage der benachbarten Schaltfeldwände (**1**) erreicht.

## Beschreibung

Die Erfindung betrifft eine mechanische Kopplung für elektrische Schaltanlagen-Felder, insbesondere für Mittelspannung mit gasisolierten Schaltanlagen.

Zwei oder mehr Schaltanlagen sollen mit einer mechanischen Kopplung für benachbarte Schaltfeldwände zweier nebeneinander stehender Schaltfelder ausgerüstet werden. Aus der Druckschrift WO 9740563 A1 ist eine Sammelschienenverbindung bekannt, bei der jedoch die Art der Befestigung und eine Kopplung der nebeneinander stehenden Schaltfelder nicht dargestellt ist. Die verwendete Sammelschienenverbindung ist für eine Festverbindung der Schaltfelder ausgestaltet. Hinweise auf eine Möglichkeit von einfachem Trennen und Wiederverbinden der Schaltfelder sind nicht vorhanden.

Eine Zentriervorrichtung für die mechanische Kopplung zweier Gehäuse mittels Bolzen und konusförmigen Zwischenstücken wird in der DE 195 12 380 C2 gezeigt. Eine wandparallele Lage der Gehäuse kann nur erreicht werden, wenn mindestens zwei Kopplungen miteinander durch Verschraubung in Eingriff gebracht werden. Weiterhin hat diese Kopplung den Nachteil, dass Bolzen und Zwischenstücke als Einzelteile verwendet werden, die leicht verloren gehen können.

Bei neueren Sammelschienenverbindungen zwischen Schaltfeldern werden Kunststoffdichtkörper eingesetzt, siehe die Veröffentlichung DE 101 19 333 C1. Im Gegensatz zu der starr ausgebildeten Sammelschienenverbindung in WO 9740563 A1 verlangt eine Sammelschienenverbindung mit Kunststoffdichtkörper einen Einpressdruck, der von den Kopplungselementen aufzubringen ist. Mechanische Kopplungen, die an der oberen und an der unteren Gehäusekante angebracht sind, sind nicht geeignet, den Einpressdruck auf den Kunststoffdichtkörper zu übermitteln. Der Wandaufbau der Schaltfelder gibt federnd gegen Außenkräfte nach, so dass die von den Kopplungen aufgebrachten Kräfte nicht voll als Einpressdruck wirksam werden.

Für den Einsatz bei Sammelschienenverbindungen mit Kunststoffdichtkörper und auch bei Schaltfeldern, deren Gehäusehöhe gegenüber bisher üblichen Abmessungen vergrößert sind, sind allein an oberer und an unterer Gehäusekante angebrachte Kopplungen nicht verwendbar. Weiterhin entstehen Schwierigkeiten der Befestigung, wenn Schaltfelder in räumlich beengten Gebäuden angeordnet und gekoppelt werden müssen, insbesondere bei der Verschaltung eines letzten in einer Reihe, und in unmittelbarer Wandnähe stehenden Schaltfeldes

Als nächstkommender Stand der Technik wird die nachveröffentlichte Patentschrift DE 101 16 896 C1 angesehen. Bei dieser mechanischen Kupplung werden benachbarte Schaltfeldwände mindestens mit den Grundelementen Bolzen, Adapterhülse und Spannschraube aneinander befestigt. Die Grundelemente sind vorzugsweise an der Ober- und/oder an der Unterkante des Gehäuses über Winkel angebracht. Der Nachteil dieser Kupplung ist derselbe wie bei den zuvor erwähnten Anordnungen. Durch den großen Abstand der Kupplung von der elektrischen Verbindung lässt sich nur schwer der notwendige Anpressdruck für Kunststoffdichtkörper erreichen.

Der Erfindung liegt daher die Aufgabe zugrunde, eine Kopplung für Schaltanlagen-Felder, insbesondere für solche mit Sammelschienenkupplung anzugeben, die die wandparallele Anordnung benachbarter Schaltfelder, das ortsgenaue, sichere mechanische und elektrische Verbinden und Trennen der Schaltfelder ermöglicht und die geeignet ist, ausreichende Druckübermittlung auf die Sammelschienenkupplung zu erzeugen.

Die Aufgabe wird erfindungsgemäß durch die Merkmale des unabhängigen Anspruches gelöst, während den abhängigen Ansprüchen vorteilhafte Weiterbildungen der Erfindung zu entnehmen sind.

Der Kern der Erfindung besteht darin, dass die, vorzugsweise metallisch ausgebildeten Kopplungselemente mindestens eine rotationssymmetrische Buchse mindestens einen rotationssymmetrischen Bolzen, mindestens eine rotationssymmetrische, hohlzylindrische Adapterhülse und mindestens die Spannschraube umfassen,
- wobei die Buchse wie folgt gestaltet ist:
   - angeschraubt oder angeschweißt angeordnet an oder in einer ersten Nachbarwand eines Schaltfeldes senkrecht zur Nachbarwand,
   - mit einer Gewindebohrung versehen zur Aufnahme des Bolzens oder der Adapterhülse,
   - mit einer Passzylinderbohrung versehen zur Aufnahme eines ersten Passzylinders des Bolzens oder eines Passzylinders der Adapterhülse,
- wobei der Bolzen wie folgt gestaltet ist:
   - einführbar in die Buchse mit einem ersten Passzylinder korrespondierend zur Passzylinderbohrung der Buchse,
   - einschraubbar in die Buchse mit einem zur Gewindebohrung der Buchse korrespondieren Außengewinde,
   - mit einem Innengewinde zur Aufnahme der Spannschraube versehen,
   - mit einem zweiten Passzylinder korrespondierend zur zweiten Passzylinderbohrung der Adapterhülse,
und die Adapterhülse wie folgt gestaltet ist:
- einführbar in die Buchse mit einem Passzylinder korrespondierend zur Passzylinderbohrung der Buchse,
- einschraubbar in die Buchse mit einem zur Gewindebohrung der Buchse korrespondieren Außengewinde,
- mit einer ersten Passzylinderbohrung versehen korrespondierend zum ersten Passzylinder des Bolzens,
- mit einer zweiten Passzylinderbohrung versehen korrespondierend zum zweiten Passzylinder des Bolzens,
- mit einer zur ersten Passzylinderbohrung abgewandt angeordneten mit Bohrung versehenen Stirnfläche zur Anlage des Kopfes der Spannschraube.

Die genannten Passzylinder und Passzylinderbohrungen sind mit enger Passungstoleranz versehen. Ihre Länge und Ausrichtung zueinander sind derart ausgebildet, dass nach Ineinanderfügen der Kopplungselemente eine parallele Lage der Nachbarwände mit definiertem Abstand erreicht wird.

Die benachbarten Schaltfeldwände sollen mit ,Nachbarwände' bezeichnet werden. Die erfindungsgemäße mechanische Kopplung ermöglicht die präzise und kontaktsichere elektrische Verbindung zwischen benachbart angeordneten Schaltfeldern von Schaltanlagen, insbesondere für Mittelspannung mit gasisolierten Schaltanlagen, wobei die Schaltfelder über mindestens eine Sammelschiene oder einer vergleichbaren Verbindung elektrisch miteinander kontaktiert sind. Die elektrische Verbindung befindet sich isoliert eingesetzt in den benachbarten Wänden der Schaltfelder.

Mit der Erfindung kann die elektrische Kupplung (insbesondere eine Sammelschienenkupplung) besonders kurz gebaut sein.

Ohne aufwendige Umbaumaßnahmen kann eine ungekoppelte Schaltanlage an eine zweite angekoppelt oder eine gekoppelte Schaltanlage abgetrennt und verschlossen werden. Die eingesetzten mechanischen Teile sind einfach aufgebaut, leicht herstellbar und bestehen aus mechanischen Standard-Teilen. Mit der Erfindung liegt eine sehr wirtschaftliche Lösung vor.

In weiterführenden Ausführungen sind noch folgende Merkmale einzeln oder auch in Kombination von Bedeutung.

Die Schaltfelder werden mit der Spannschraube zusammengezogen. Die Spannschraube durchgreift die Adapterhülse (mit oder ohne Verlängerungsrohr) und den hohlzylindrischen Bolzen und fasst in ein in ihm ausgebildetes Gewinde. Der Bolzen ist am den zweiten Passungszylinder tragenden Ende konisch angeschrägt, so dass ein einfaches und sicheres Finden von Bolzen und Adapterhülse möglich ist.

Mindestens ein Distanzstück oder ein Abstandshalter bestimmen die Endlage (Felderfuge) der zueinander zusammengezogenen Nachbarwände. Das Distanzstück kann als Bund am Bolzen oder sonst an einem der Teile der Kopplungselemente ausgebildet sein. Die Endlage der zueinander zusammengezogenen Nachbarwände ist auf die den Abstand der Schaltfeldwände bestimmenden Abmessungen der elektrischen Kupplung einschließlich der Befestigungselemente für die elektrische Kupplung abgestimmt. Passend dazu ist die Länge von Buchse, Bolzen und Adapterhülse auf die Abmessungen der elektrischen Verbindungselemente bemessen. Zeitlich vor der mechanischen Kopplung zweier Schaltfelder werden die elektrischen Verbindungselemente (Isolierkörper, Kupplungsbolzen) vorbereitet und angeschraubt. Hierbei steht der zweite Passungszylinder des Bolzens notwendigerweise räumlich aus der Ebene der Nachbarwände heraus. Mindestens um diesen Überstand ist der zweite Passungszylinder des Bolzens länger, so dass Passungszylinder und Passzylinderbohrung in der Buchse mechanisch eher ,greifen', bevor die elektrischen Verbindungselemente in Kontakt treten.

Die Kopplungselemente können an je einem Befestigungswinkel angeordnet sein, der jeweils an einer Außenwand oder einer Kante der Nachbarwände angebracht sein kann. Die Kopplungselemente können jedoch auch nur an oder in einer der Nachbarwände ausgebildet sein. Für den Fachmann ist klar, dass auch eine Kombination einsetzbar ist.

Zur sicheren Anordnung sollten mindestens zwei Kopplungen eingesetzt werden. Der oder die elektrischen Kontakte, beispielsweise je eine Sammelschiene für eine Phase liegen zwischen den Kopplungen. Die Lage sollte vorzugsweise so sein, dass die Kontakte auf der Verbindungslinie zweier mechanischer Kopplungen oder anderweitig symmetrisch zu den Kopplungen liegen.

Weitere Ausgestaltungen finden sich im Folgenden:

Die Buchse ist als erstes Ende eines Passungsrohres ausgebildet, welches an seinem zweiten Ende eine identisch ausgebildete zweite Buchse trägt, wobei die Länge des Passungsrohres dem Abstand zweier Seitenwände eines Schaltfeldes entspricht. Damit erhält man quasi eine sich über die gesamte Breite eines Schaltfeldes erstreckende Buchse.

Das Passungsrohr ist zwischen zwei jeweils an einer Kante zweier Nachbarwände eines Schaltfeldes vorhandenen Befestigungswinkel angeordnet. Damit werden die unmittelbaren Kräfte auf die Befestigungswinkel verringert, so dass die Befestigungswinkel mechanisch schwächer dimensioniert werden können.

Bei der Verwendung der erfindungsgemäßen Kopplung in einer gasisolierten Schaltanlage liegt die mechanische Kopplung im Bereich des Gastanks der Schaltanlage. Es wird daher vorgeschlagen, das Passungsrohr durch den Gastank verlaufen zu lassen. Das Passungsrohr wird daher gasdicht zwischen zwei Nachbarwänden eines Schaltfeldes eingebracht (eingeschweißt) und durchdringt den zwischen den Nachbarwänden liegenden Gastank.

Ein Verlängerungsrohr ist mit etwas geringerem Durchmesser als der der Adapterhülse in das Passungsrohr einführbar. Mit dem Passungsrohr wird der Abstand zwischen einem einseitig eingeschraubten Adapter und der gegenüber liegenden Wand des Schaltfeldes überbrückbar. Hierzu findet dann eine Spannschraube Verwendung, deren Schaft so lang ausgebildet ist, dass die Spannschraube mit ihrem Kopf an der adapterfernen Stirnseite des Verlängerungsrohres anliegt und das Gewinde in das Innengewinde der Adapterhülse greift.

Der Abstand der Schaltfelder zwischen zueinander gezogenen Nachbarwänden ist durch mindestens ein zwischen den Nachbarwänden angeordnetes Distanzstück festgelegt. Form und Lage von Distanzstücken können unterschiedlich sein, wobei eine Ausbildung von Distanzstücken an den Zwischenwänden vorhanden sein kann. Alternativ können ein oder mehrere Abstandsstücke an einem oder mehrere Teilen der Kopplungselemente ausgebildet sein.

Mindestens zwei mechanische Kopplungen können vorgesehen sein, wobei die elektrische Verbindung an einem Ort zwischen den Kopplungen angeordnet ist, so dass möglichst eine symmetrische Beaufschlagung (vergleiche den angesprochenen Druck auf einen Isolierdichtkörper) der elektrischen Verbindungselemente (Sammelschiene) erfolgt. Ebenso so können in Symmetrie dazu an den Nachbarwänden die Distanzstücke vorhanden sein.

Weitere Einzelheiten und Vorteile der Erfindung ergeben sich aus den folgenden, anhand von Figuren erläuterten Ausführungsbeispielen. Es zeigen im Einzelnen
Fig. 1 ein Schaltfeld und das Detail der Einzelheit bei R,
Fig. 2 eine Kopplung mit Passungsrohr,
Fig. 3 einen Bolzen,
Fig. 4 eine Spannschraube,
Fig. 5 eine Adapterhülse,
Fig. 6 Schnitt durch eine Kopplung und
Fig. 7 Schnitt durch eine vereinfachte Kopplungsausführung.

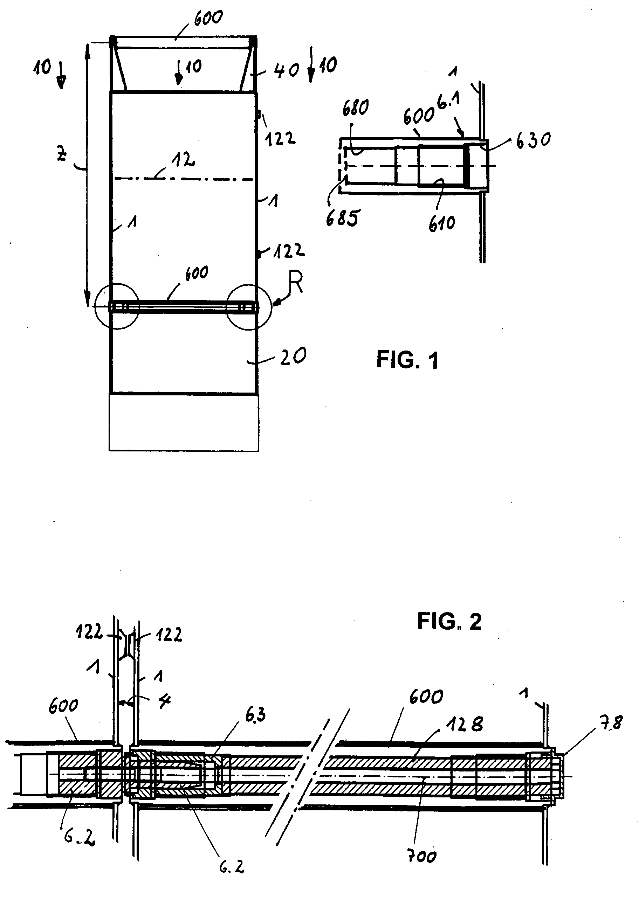

Die Verschraubung der Schaltfeldwände, mit der die Schaltfelder zueinander festgelegt werden, erfolgt vorzugsweise über zwei erfindungsgemäße Kopplungen. Die Figur 1 zeigt ein Schaltfeld 10, zu dem jeweils rechts und links ein weiteres Schaltfeld benachbart sein kann (angedeutet durch die beiden seitlich gesetzten Pfeile 10). Das Schaltfeld enthält einen Gastank 20 (SF6 gefüllt), durch welchen ein Passungsrohr 600 verläuft. Die Einzelheit R ist im Detail herausgezeichnet und zeigt das in die Schaltfeldwand 1 eingeschweißte Ende des Passungsrohrs 600 mit einer Innenbohrung 610, einer Zylinderpassbohrung 630, einem Hohlraum 680 und den in das Rohr hinein verlängerten Durchmesser der Gewindebohrung 610. Das Ende des Passungsrohrs 600 wird allgemein als Buchse 6.1 bezeichnet. Die Buchse kann somit als relativ kurzes Bauteil mit (oder ohne) einem dem Inneren des Schaltfeldes zugewandten Boden 685 oder als durchgehendes Rohr 600 ausgebildet sein.

Zwei Befestigungswinkel 40 sitzen an einer Oberkante des Gehäuses, bzw. der Nachbarwände 1. Zwischen ihnen ist ein weiteres Passungsrohr 600 angeordnet, welches endseitig identisch ausgebildet ist, wie in Detail R. Zwischen den Kopplungen, bzw. den beiden Passungsrohren 600 ist ein Abstand Z vorhanden. Etwa in der Mitte des Abstandes Z zwischen den beiden Passungsrohren 600 befindet sich die elektrische Kupplung 12, etwa eine Sammelschienenverbindung. Mit Bezugszeichen 685 im Detail R ist angedeutet, dass die Buchse 6.1 zum Inneren des Schaltfeldes hin mit einem geschlossenen Boden ausgebildet sein kann.

An der Oberfläche der Schaltfeldwand 1 sind mit Bezugszeichen 122 zwei Distanzstücke gezeigt. Zwischen zwei Schaltfeldwänden wird mit der Dicke der Distanzstücke der Abstand 4 in Endlage zueinander gezogener Schaltfeldwände bestimmt; siehe auch Fig. 2.

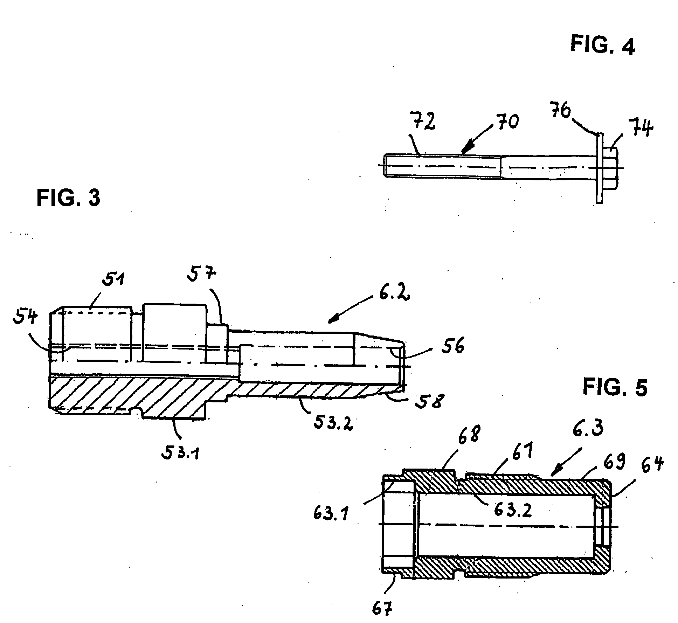

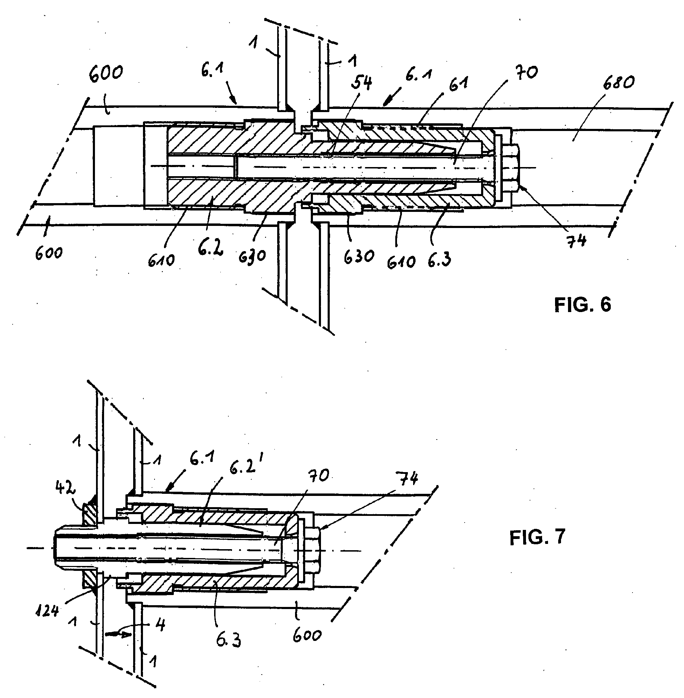

Die Kopplung wird dadurch hergestellt (siehe auch Fig. 6), dass die Nachbarwände 1 zueinander hin geführt werden. Dabei findet der Bolzen 6.2 über die konische Anschrägung 58 in die Passzylinderbohrung 63.2 der Adapterhülse 6.3. Die Kopplung wird mit der Spannschraube 70 (Fig. 4) verschraubt. Die Spannschraube 70 wird auf einer Seite des Passungsrohres 600 eingeführt, bis das Gewinde 72 der Spannschraube 70 in das Innengewinde 54 des Bolzens 6.2 fasst. Durch Drehen der Spannschraube 70 mit einem in das Passungsrohr greifenden Werkzeug am Sechskantkopf 74, der sich über eine Kopfscheibe 76 an der Stirnfläche 64 der Adapterhülse 6.3 abstützt, werden die Nachbarwände 1 an den beiden Kopplungen gleichmäßig und parallel zusammen gezogen. Die Endlage wird erreicht, wenn Distanzstücke 122 oder andere Abstandshalter aneinander anschlagen.

Das Zusammenführen zweier Schaltfelder wird mit der zuvor dargestellten Kopplung nicht möglich, wenn das zuletzt zuzufügende Schaltfeld eng an einer Gebäudewand zu stehen kommt, so dass die Spannschraube nicht einführbar oder die Spannschraube mit einem Werkzeug in der Tiefe des Passungsrohrs nicht erreichbar ist. Für diese beengte Raumsituation wird ein Verlängerungsrohr und eine entsprechend verlängerte Spannschraube 700 (siehe Fig. 2) eingesetzt, so dass der Kopf der Spannschraube an der Oberfläche der zur Gebäudewand gerichteten Nachbarwand erreichbar ist. Die dort vorhandene Öffnung kann mit einer Kappe 78 verschlossen werden, die in die freie Gewindebohrung 610 des Passungsrohrs einschraubbar ist. Die verlängerte Spannschraube liegt nicht unmittelbar an der Stirnfläche 64 der Adapterhülse 6.3 an. In der Situation der Fig. 2 liegt ein Verlängerungsrohr 128 an der Stirnfläche 64 an und die Kopfscheibe 76 der Spannschraube 700 übermittelt die Zugkraft auf die Adapterhülse.

Es ist für den Fachmann klar, dass die Arten der Anordnungen auch leicht abgewandelt werden können, wobei es allein darauf ankommt, dass die Lage von Bolzen 6.2 zur Buchse 6.1 zueinander fluchtet und eine parallele Endlage (mit Abstand 4) der Nachbarwände zueinander erreichbar ist, mit präzisem Ineinanderfassen der Kontaktteile der schematisch dargestellten elektrischen Verbindung 12.

Abwandlung können darin bestehen, dass die Kopplungselemente nur in den Nachbarwänden, oder nur an den Kanten der Nachbarwände oder in Kombination davon angeordnet sind.

In Figur 3 ist der Bolzen 6.2 dargestellt. Er ist hohlzylindrisch (mit Bohrung 56 und Innengewinde 54). Das Innengewinde 54 dient der Aufnahme des Gewindeschafts 72 der Spannschraube 70. Der Bolzen 6.2 hat ein Außengewinde 51 zum Einschrauben in das Innengewinde 610 der Buchse 6.1. Die erste Zylinderpassung 53.1 fasst in die Passzylinderbohrung 630 der Buchse 6.1 bzw. des Passungsrohrs. Mit der Zylinderpassung ist die ortsgenaue Zuordnung von Bolzen und Buchse sichergestellt, die mit einem Schraubgewinde allein nicht erreichbar wäre. Zur Erleichterung der Einschraubbarkeit ist am Bolzen ein Schlüsselsechskant 57 ausgebildet.

In Figur 5 ist die hohlzylindrische Adapterhülse 6.3 dargestellt. Die Innenbohrung 63.2 ist passgenau zum Passzylinder 53.2 des Bolzens ausgebildet. Die größere Bohrung 63.1 dient der Aufnahme des Schlüsselsechskants 57 (bzw. des Bundes 124 am Bolzen 6.2' in Fig. 7). Die Bohrung 63.1 kann in der Tiefenausdehnung auch als Anschlag zum Zweck der Positionierung der Nachbarwände dienen, entsprechend dem Anwendungszweck der Distanzstücke. Der Bohrung 63.1 gegenüber liegt eine bis auf den Durchmesser des Schafts der Spannschraube 70 verkleinerte zweite Bohrung. Die der Bohrung 63.1 gegenüberliegende Seite der Adapterhülse 6.3 bildet eine Stirnfläche 64 zur Anlage des Gewindekopfes oder einer gleichwirkenden Kopfscheibe 76 der Spannschraube 70. Die Außenfläche 69 der Adapterhülse ist in ein Außengewinde 61, einen Passzylinder 68 und eine Schlüsselfassung 67 gegliedert. Das Außengewinde 61 fasst in das Innengewinde 610 und der Passzylinder 68 in die Zylinderpassung 630 der Buchse 6.1.

Die Fig. 6 zeigt einen Schnitt durch eine Kopplung zwischen zwei Schaltfeldern mit den Nachbarwänden 1. Die Darstellung ist gegenüber der Einzelheit R in Fig. 1 vergrößert gezeichnet, wobei in die linke Buchse 6.1 ein Bolzen 6.2 und in die rechte Buchse 6.1 eine Adapterhülse 6.3 eingesetzt ist. Die Spannschraube 70 durchdringt die Adapterhülse 6.3 und fasst in das Innengewinde 54 des Bolzens 6.1.

In einer weiteren Ausführungsform kann die Verschraubung der Schaltfeldwände mit einer einzigen erfindungsgemäßen Kopplung kombiniert mit einer vereinfachten Koppelverbindung erfolgen. Die vereinfachte Koppelverbindung besteht darin, dass in einer Schaltfeldwand oder an einem Befestigungswinkel nur eine Gewindemutter 42 (Fig. 7) ausgebildet ist, in die ohne passgenaue Führung ein vereinfacht ausgebildeter Bolzen 6.2' eingeschraubt ist. Die Gewindemutter 42 kann an einem Befestigungswinkel oder an einer Seitenwand 1 angeschweißt sein. Der Bolzen 6.2' ist ohne Passzylinder, und die Gewindemutter 42 ohne Passzylinderbohrung ausgebildet. Ansonsten entspricht die Befestigung über die Adapterhülse 6.3 mittels Spannschraube 70 der Darstellung in Figur 6. Am Bolzen 6.2' ist ein Distanzstück als Bund 124 ausgebildet. Korrespondierend zur Länge des Bundes 124 ist die Tiefe der ersten Passzylinderbohrung 63.1 an der Adapterhülse 6.3 ausgebildet. Der Bund 124 kann als Schlüssel-Sechskant ausgebildet sein.

### Bezugszeichen

- 1: Nachbarwand
- 4: Abstand der Nachbarwände
- 10: Schaltfeld
- 12: Sammelschiene (el. Verbindung)
- 20: Gastank
- 40: Befestigungswinkel
- 42: Gewindemutter
- 6.2: Bolzen
- 51: Außengewinde
- 53.1: erster Passzylinder
- 53.2: zweiter Passzylinder
- 54: Innengewinde
- 56: Passzylinderbohrung
- 57: Bund - Schlüsselfläche
- 58: konische Anschrägung
- 6.3: Adapterhülse
- 61: Außengewinde
- 63.1: erste Passzylinderbohrung
- 63.2: zweite Passzylinderbohrung
- 64: Stirnfläche
- 67: Bund - Schlüsselfläche
- 68: Passzylinder
- 69: Außenfläche
- 600: Passungsrohr
- 610: Innengewinde
- 630: Passzylinderbohrung
- 680: Hohlraum
- 685: Boden
- 70, 700: Spannschraube
- 72: Gewindeschaft
- 74: Sechskantkopf
- 76: Kopfscheibe
- 78: Abdeckkappe
- 122: Distanzstück
- 128: Verlängerungsrohr
- Z: Abstand zweier Kopplungselemente

## Patentansprüche

1. Mechanische Kopplung zwischen benachbart angeordneten Schaltanlagen-Feldern (**10**), insbesondere für Mittelspannung,
wobei die Schaltfelder (**10**) über mindestens eine elektrische Verbindung (**12**) elektrisch miteinander gekuppelt sind und die elektrische Verbindung (**12**) in den Wänden (**1**) der Schaltfelder (**10**) isoliert eingesetzt ist,
und an oder in benachbarten Wänden (**1**) (im folgenden mit 'Nachbarwände' bezeichnet) nebeneinander angeordneter Schaltfelder (**10**) mechanische Kopplungselemente (**6.1, 6.2, 6.3**) angebracht sind, die über mindestens eine Spannschraube (**70,700**) in eine definierte Endlage (**4**) zueinander gezogen und fixiert werden, **dadurch gekennzeichnet, dass** die Kopplungselemente mindestens eine rotationssymmetrische Buchse (**6.1**), mindestens einen rotationssymmetrischen Bolzen (**6.2**), mindestens eine rotationssymmetrische, hohlzylindrische Adapterhülse (**6.3**) und mindestens die Spannschraube (**70, 700**) umfassen,
- wobei die Buchse (**6.1**) wie folgt gestaltet ist:
• angeschraubt oder angeschweißt angeordnet an oder in einer ersten Nachbarwand (**1**) eines Schaltfeldes (**10**) senkrecht zur Nachbarwand (**1**),
• mit einer Gewindebohrung (**610**) versehen zur Aufnahme des Bolzens (**6.2**) oder der Adapterhülse (**6.3**),
• mit einer Passzylinderbohrung (**630**) versehen zur Aufnahme eines ersten Passzylinders (**53.1**) des Bolzens (**6.2**) oder eines Passzylinders (**68**) der Adapterhülse (**6.3**),
- wobei der Bolzen (**6.2**) wie folgt gestaltet ist:
• einführbar in die Buchse (**6.1**) mit einem ersten Passzylinder (**53.1**) korrespondierend zur Passzylinderbohrung (**630**) der Buchse (**6.1**),
• einschraubbar in die Buchse (**6.1**) mit einem zur Gewindebohrung (**610**) der Buchse korrespondieren Außengewinde (**51**),
• mit einem Innengewinde (**54**) zur Aufnahme der Spannschraube (**70, 700**) versehen,
• mit einem zweiten Passzylinder (**53.2**) korrespondierend zur zweiten Passzylinderbohrung (**63.2**) der Adapterhülse (**6.3**),
und die Adapterhülse (6.3) wie folgt gestaltet ist:
• einführbar in die Buchse (**6.1**) mit einem Passzylinder (**68**) korrespondierend zur Passzylinderbohrung (**630**) der Buchse (**6.1**),
• einschraubbar in die Buchse (**6.1**) mit einem zur Gewindebohrung (**610**) der Buchse (**6.1**) korrespondieren Außengewinde (**61**),
• mit einer ersten Passzylinderbohrung (**63.1**) versehen korrespondierend zum ersten Passzylinder (**53.1**) des Bolzens (**6.2**),
• mit einer zweiten Passzylinderbohrung (**63.2**) versehen korrespondierend zum zweiten Passzylinder (**53.2**) des Bolzens (**6.2**),
• mit einer zur ersten Passzylinderbohrung (**63.1**) abgewandt angeordneten mit Bohrung versehenen Stirnfläche (**64**) zur Anlage des Kopfes (**74**) der Spannschraube (**70, 700**).

2. Kopplung nach Anspruch 1, **dadurch gekennzeichnet, dass** die Buchse (**6.1**) an ihrem zur Innenseite des Schaltfeldes (**10**) gerichteten Ende (Boden **685**) verschlossen ist.

3. Kopplung nach Anspruch 1 oder 2, **dadurch gekennzeichnet, dass** die Buchse (**6.1**) an einem Befestigungswinkel (**40**) an einer Kante einer Nachbarwand (**1**) angeordnet ist.

4. Kopplung nach Anspruch 1 oder 3, **dadurch gekennzeichnet, dass** die Buchse (**6.1**) als erstes Ende eines Passungsrohres (**600**) ausgebildet ist, welches an seinem zweiten Ende eine identisch ausgebildete zweite Buchse (**6.1**) trägt und die Länge des Passungsrohres (**600**) dem Abstand zweier Seitenwände (**1**) eines Schaltfeldes (**10**) entspricht.

5. Kopplung nach Anspruch 4, **dadurch gekennzeichnet, dass** das Passungsrohr (**600**) zwischen zwei jeweils an einer Kante zweier Nachbarwände (**1**) eines Schaltfeldes (**10**) angeordneten Befestigungswinkeln (**40**) angeordnet ist.

6. Kopplung nach Anspruch 4, **dadurch gekennzeichnet, dass** das Passungsrohr (**600**) gasdicht zwischen zwei Nachbarwänden (**1**) eines Schaltfeldes (**10**) eingebracht ist und einen zwischen den Nachbarwänden (**1**) liegenden Gastank (**20**) durchdringt.

7. Kopplung nach einem der vorhergehenden Ansprüche, **dadurch gekennzeichnet, dass** der Bolzen (**6.2**) am den zweite Passungszylinder (**53.2**) tragenden Ende (**58**) konisch angeschrägt ist.

8. Kopplung nach einem der vorhergehenden Ansprüche, **dadurch gekennzeichnet, dass** ein Verlängerungsrohr (**128**) mit etwas geringerem Durchmesser als der der Adapterhülse (**6.3**) in das Passungsrohr (**600**) einführbar ist, wodurch der Abstand zwischen einem einseitig eingeschraubten Adapter (**6.3**) und der gegenüber liegenden Wand des Schaltfeldes (**10**) überbrückbar ist und hierzu eine Spannschraube (**700**) Verwendung findet, deren Schaft so lang ausgebildet ist, dass die Spannschraube (**700**) mit ihrem Kopf (**76**) an der adapterfernen Stirnseite des Verlängerungsrohres (**128**) anliegt und das Gewinde (**72**) durch die Adapterhülse (**6.3**) hindurch bis in das Innengewinde eines in die Adapterhülse eingeführten Bolzens (**6.2**) greift.

9. Kopplung nach einem der vorhergehenden Ansprüche, **dadurch gekennzeichnet, dass** der Abstand (**4**) der Schaltfelder (**10**) zwischen zueinander gezogenen Nachbarwänden (**1**) durch mindestens ein zwischen den Nachbarwänden (**1**) angeordnetes Distanzstück (**22**) festgelegt ist.

10. Kopplung nach einem der vorhergehenden Ansprüche, **dadurch gekennzeichnet, dass** mindestens zwei mechanische Kopplungen vorgesehen sind und die elektrische Verbindung (**12**) an einem Ort zwischen den Kopplungen angeordnet ist.
